# EUROPEAN PATENT APPLICATION

(11) **EP 3 310 023 A1**
(43) Date of publication of application: **18.04.2018**
(21) Application number: 15882454.0
(22) Date of filing: 16.11.2015
(51) Int. Cl.: H04L 29/08

(54) **NETWORK MANAGEMENT DATA PROCESSING METHOD AND APPARATUS**

(30) Priority: 16.07.2015 CN 201510418954
(71) Applicant: ZTE Corporation, Shenzhen, Guangdong 518057 (CN)
(72) Inventor: ZHU, Hui, Shenzhen Guangdong 518057 (CN)
(74) Representative: HGF Limited
(86) International application number: PCT/CN2015/094706
(87) International publication number: WO 2016/131315

(57) **Abstract**

The present document discloses a network management data processing method and apparatus. The method includes: collecting performance data of a lower network manager; extracting a performance data model from the performance data according to a pre-set extraction rule; comparing the performance data model with a pre-set performance data model; and outputting prompt information corresponding to a comparison result, and/or, updating the pre-set performance data model according to the performance data model when the performance data model is inconsistent with the pre-set performance data model.

## Description

### Technical Field

The present application relates to, but not limited to, the field of telecommunications.

### Background

In the field of telecommunications, performance data are statistical information generated during the running process of a network unit, network equipment and a network terminal, and by collecting, storing, calculating, analyzing and displaying the performance data, the effectiveness of a network and the network unit can be evaluated, and the state of the network equipment is monitored, and network planning and network analysis are supported, etc. To manage lower network managers, a higher network manager usually collects performance data of the lower network managers, and converts the collected performance data according to a pre-set data model, such that the higher network manager can identify the converted performance data and monitor states of the lower network managers according to the converted performance data.

Because of various reasons, such as historical factors and business strategies and the like, an operator adopts network equipment of multiple vendors. In addition, the network equipment will be replaced and upgraded by steps by stages. Therefore, when the lower network manager is changed (replaced, newly added or upgraded or the like), a performance data model corresponding to the performance data thereof will change. The defects in the related art are as follows. When the lower network manager is newly added or updated to result in change of a performance data model, the higher network manager cannot perform automatic identification.

### Summary

The following is a brief introduction for a subject described herein in detail. The brief introduction is not intended to restrict the scope of protection of claims.

The present document provides a network management data processing method, capable of solving the technical problem that a higher network manager cannot automatically identify whether a performance data model is changed when a lower network manager is newly added or updated.

A network management data processing method includes the steps as follows.

Performance data of a lower network manager are collected.

A performance data model is extracted from the performance data according to a pre-set extraction rule.

The performance data model is compared with a pre-set performance data model.

Prompt information corresponding to a comparison result is output, and/or
the pre-set performance data model is updated according to the performance data model when the performance data model is inconsistent with the pre-set performance data model.

In an exemplary embodiment, after the performance data model is compared with a pre-set performance data model, and prompt information corresponding to a comparison result is output, the network management data processing method further includes that:
when an update instruction is received, the pre-set performance data model is updated according to the performance data model.

In an exemplary embodiment, the step that prompt information corresponding to a comparison result is output includes that:
a performance data model inconsistent with the pre-set performance data model is marked, and corresponding marking information is output.

In an exemplary embodiment, after performance data of a lower network manager are collected and before a performance data model is extracted from the performance data according to a pre-set extraction rule, the network management data processing method further includes the step as follows.

A format conversion is performed on the performance data according to a pre-set format conversion rule.

The step that a performance data model is extracted from the performance data according to a pre-set extraction rule includes that:

The performance data model is extracted from the format-converted performance data according to the pre-set extraction rule.

In an exemplary embodiment, the performance data model includes a group performance data model and a performance data sub-model associated with the group performance data model. Herein, information about one or more performance parameters is described in the group performance data model, and attribute information of a performance parameter in the group performance data model associated with the performance data sub-model is described in the performance data sub-model.

A network management data processing apparatus includes a collection module, an extraction module and a comparison module.

The collection module is configured to collect performance data of a lower network manager.

The extraction module is configured to extract a performance data model from the performance data according to a pre-set extraction rule.

The comparison module is configured to compare the performance data model with a pre-set performance data model, output prompt information corresponding to a comparison result, and/or, update the pre-set performance data model according to the performance data model when the performance data model is inconsistent with the pre-set performance data model.

In an exemplary embodiment, the network management data processing apparatus further includes:
an update module, configured to update, when receiving an update instruction, the pre-set performance data model according to the performance data model.

In an exemplary embodiment, the comparison module includes a comparison unit and an output unit.

The comparison unit is configured to compare the performance data model with the pre-set performance data model.

The output unit is configured to mark a performance data model inconsistent with the pre-set performance data model, and output corresponding marking information.

In an exemplary embodiment, the network management data processing apparatus further includes:
a format conversion module, configured to perform a format conversion on the performance data according to a pre-set format conversion rule.

Herein, the extraction module is further configured to extract a performance data model from the format-converted performance data according to the pre-set extraction rule.

In an exemplary embodiment, the performance data model includes a group performance data model and a performance data sub-model associated with the group performance data model. Herein, information about one or more performance parameters is described in the group performance data model, and attribute information of a performance parameter in the group performance data model associated with the performance data sub-model is described in the performance data sub-model.

A computer-readable storage medium stores a computer-executable instruction, and the computer-executable instruction is used to execute the method as any one of the contents mentioned above.

According to the network management data processing method and apparatus provided in the embodiments of the present invention, performance data of a lower network manager are collected; and a performance data model is extracted from the performance data according to a pre-set extraction rule; and the performance data model is compared with a pre-set performance data model; and prompt information corresponding to a comparison result is output, and/or the pre-set performance data model is updated according to the performance data model when the performance data model is inconsistent with the pre-set performance data model. Thus, when a lower network manager is newly added or updated to result in change of a performance data model, a higher network manager can perform automatic identification, and can output prompt information or automatically complete update for the pre-set performance data model.

After the drawings and the detailed descriptions are read and understood, other aspects can be understood.

### Brief Description of Drawings

FIG. 1 is a flowchart of a network management data processing method according to a first embodiment of the present invention.
FIG. 2 is a flowchart of a network management data processing method according to a second embodiment of the present invention.
FIG. 3 is a function module diagram of a network management data processing apparatus according to the first embodiment of the present invention.
FIG. 4 is a function module diagram of a network management data processing apparatus according to the second embodiment of the present invention.

### Detailed Description

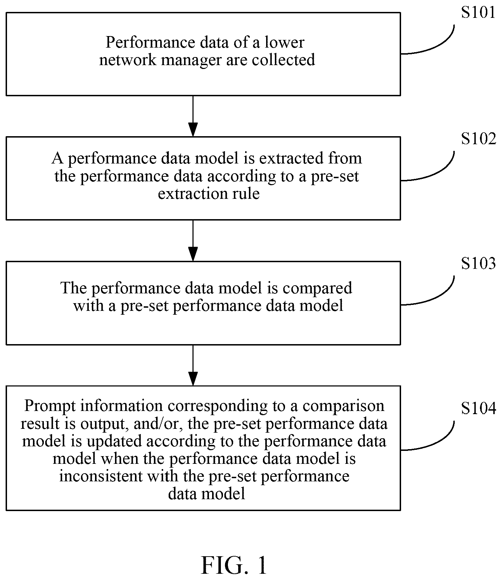

An embodiment of the present invention provides a network management data processing method. The network management data processing method can be applied to automatic management of a performance data model in a telecommunication Operation Support System (OSS) domain, and is particularly suitable for management over an Element Management System (EMS) by a Network Management System (NMS) in the telecommunication OSS domain. In addition, the method may also be applied to management over a Net Element (NE) by the EMS. In the embodiments of the present invention, management over the EMS by the NMS is taken as an example. In the present embodiment and the following embodiments, the EMS is collectively referred to as a lower network manager, and the NMS is collectively referred to as a higher network manager. Referring to FIG. 1, FIG. 1 is a flowchart of a network management data processing method according to a first embodiment of the present invention. The network management data processing method provided in the embodiment of the present invention includes the steps S101-S104 as follows.

In step S101, performance data of a lower network manager are collected.

In the present embodiment, a higher network manager may be provided with one or more collection access points for collecting performance data of a lower network manager, and each collection access point is configured with a collection task to collect the performance data of the lower network manager. The higher network manager may actively acquire the performance data of the lower network manager in real time or regularly, or the lower network manager may send the performance data to the higher network manager in real time or regularly.

In step S102, a performance data model is extracted from the performance data according to a pre-set extraction rule.

In the present embodiment, a performance data model is performance data statistical parameter item information not containing performance data values, and may be, e.g., a parameter type corresponding to the performance data, attribute information corresponding to each parameter and the like.

A pre-set extraction rule may be set according to actual requirements. For example, the collected data may be parsed firstly, and then a performance data model may be extracted from the parsed performance data. Or, a performance data model may be directly extracted from collected original data. When the performance data model is extracted, the performance data model may be extracted according to a pre-set format. For example, the format of a pre-set performance data model is: parameter statistical items in a first column are "Name", "Network", "Vendor", "NE Type", "Version", "Granularity", "Performance Index" and the like respectively, so that the performance data model is extracted according to the format when the performance data model is extracted.

In step S103, the performance data model is compared with a pre-set performance data model.

In the present embodiment, there may be multiple pre-set performance data models in each higher network manager, and there may also be multiple pre-stored performance data models corresponding to each lower network manager, herein the quantity may be set according to actual requirements. When a performance data model is extracted, the performance data model is extracted according to the format of a pre-set performance data model. To increase the comparison efficiency, when a performance data model is extracted, identification information may be established for each extracted performance data model according to a pre-set rule, and identification information may also be established for the pre-set performance data models according to the above-mentioned pre-set rule. When the performance data model is compared with the pre-set performance data models, whether there is identification information consistent with the performance data model may be searched firstly. When the identification information is not found, it is indicated that the currently-extracted performance data model is a performance data model corresponding to a newly-added lower network manager. When the identification information is found, the performance data model is compared with a pre-set performance data model corresponding to the found identification information, and when the performance data model is inconsistent with the pre-set performance data model corresponding to the found identification information, it is indicated that a lower network manager corresponding to the currently-extracted performance data model is updated or upgraded.

In step S104, prompt information corresponding to a comparison result is output, and/or the pre-set performance data model is updated according to the performance data model when the performance data model is inconsistent with the pre-set performance data model. The comparison result may be divided into two types, i.e., consistency and inconsistency. When the comparison result is inconsistency, prompt information may be output and displayed. And the prompt information may be a list, and all performance data models inconsistent with the pre-set performance data model are recorded in the list, to prompt a user of whether to update the performance data model. The operations as follows may be performed. That is, when a trigger operation based on the list is received, a performance data model corresponding to the trigger operation is determined, and the pre-set performance data model is updated according to the determined performance data model. When the inconsistent performance data model is a newly-added performance data model, the inconsistent performance data model is directly set as the pre-set performance data model; and when the inconsistent performance data model is an updated performance data model, the corresponding pre-set performance data model is directly updated according to the inconsistent performance data model. In addition, the above-mentioned prompt information may also be a display interface, herein the display interface displays prompt information such as "a performance data model is updated or newly added". The display interface may further be provided with an update control or a cancelation control. When the user triggers the update control, a higher NMS will automatically update the pre-set performance data model according to the performance data model, and when the user triggers the cancelation control, no processing is performed.

In the present step, the pre-set performance data model is updated according to the performance data model. The higher network manager can automatically update a pre-set performance data model corresponding to a lower network manager, and acquisition time for a performance data model during connection between the higher network manager and each lower network manager is effectively shortened. Moreover, at the later period of development of telecommunication projects, once the performance data model corresponding to the lower network manager is changed, the higher network manager can automatically update the pre-set performance data model, and the labor cost and the time cost are effectively reduced.

According to the network management data processing method provided in the embodiments of the present invention, performance data of a lower network manager are collected, and a performance data model is extracted from the performance data according to a pre-set extraction rule, and then the performance data model is compared with a pre-set performance data model, and prompt information corresponding to a comparison result is output, and/or the pre-set performance data model is updated according to the performance data model when the performance data model is inconsistent with the pre-set performance data model. Thus, when a lower network manager is newly added or updated to result in change of a performance data model, a higher network manager can perform automatic identification, and can output prompt information or automatically complete the update for the pre-set performance data model.

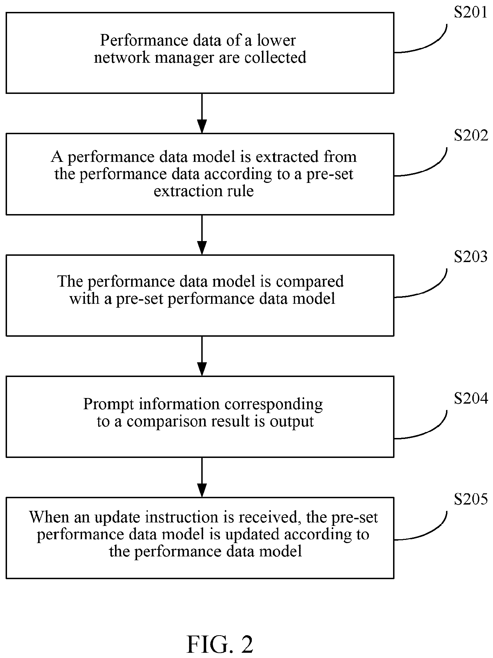

To be capable of automatically identifying a performance data model corresponding to a lower network manager and updating a corresponding pre-set performance data model, a network management data processing method according to a second embodiment is provided on the basis of the network management data processing method in the first embodiment of the present invention. Referring to FIG. 2, FIG. 2 is a flowchart of a network management data processing method according to the second embodiment of the present invention. Steps S201 to S203 are the same as the steps S101 to S103 in the first embodiment. In step 204, prompt information corresponding to a comparison result is output. After step 204, the method includes the step as follows.

In step S205, when an update instruction is received, the pre-set performance data model is updated according to the performance data model.

In the present embodiment, prompt information may be a list, and all performance data models inconsistent with the pre-set performance data model are recorded in the list, to prompt a user of whether to update the performance data model. When a trigger operation based on an identifier corresponding to a certain performance data model in the list is received, which may be regarded as that an update instruction is received, the pre-set performance data model is updated according to a performance data model corresponding to the update instruction. When the inconsistent performance data model is a newly-added performance data model, the inconsistent performance data model is directly set as the pre-set performance data model. When the inconsistent performance data model is an updated performance data model, the corresponding pre-set performance data model is directly updated according to the inconsistent performance data model. In addition, the above-mentioned prompt information may also be a display interface, herein the display interface displays prompt information such as "a performance data model is updated or newly added". The display interface may be further provided with an update control or a cancelation control. When the user triggers the update control, which may be regarded as that the update instruction is received, a higher NMS will automatically update the pre-set performance data model according to the performance data model; and when the user triggers the cancelation control, no processing is performed.

According to the network management data processing method provided in the present embodiment, a higher network manager can automatically update the pre-set performance data model corresponding to a lower network manager according to the selection of a user.

To be capable of automatically identifying a performance data model corresponding to a lower network manager and updating a corresponding pre-set performance data model, a network management data processing method according to a third embodiment is provided on the basis of the network management data processing method in the first or second embodiment of the present invention. Step S103 or S203 includes that:
the performance data model is compared with a pre-set performance data model, and a performance data model inconsistent with the pre-set performance data model is marked, and corresponding marking information is output.

In the present embodiment, the marking information may be output in a list form, and each piece of marking information may correspond to a performance data model. Each piece of marking information may also correspond to a set control, and when the corresponding control is triggered, a pre-set performance data model is updated according to a performance data model corresponding to the control.

To be capable of automatically identifying a performance data model corresponding to a lower network manager and updating a corresponding pre-set performance data model, a network management data processing method according to a fourth embodiment is provided on the basis of the network management data processing method in any one of the first to third embodiments of the present invention. After the step S101 and before the step S102, the network management data processing method further includes: a format conversion is performed on the performance data according to a pre-set format conversion rule.

Since an EMS of each vendor has different data format specifications, for example, a file supporting FTP/SFTP also includes files such as xml, txt and csv and the like, each NMS is provided with one or more collection access points. Herein, each collection access point needs to parse and develop a collected performance data file independently. A common file format supports a set of collection access points, and is configured to be reused by different collection columns.

Each collection access point is correspondingly provided with one or more collection components, and the collection components may include an FTP collection component, an SNMP collection component, a Corba collection component and the like. Each collection component supports a class of data transmission protocols. Once a lower network manager has a new access protocol, a corresponding component may be developed into the collection component. A collection task is a performance collection process, and the collection component will be called to acquire original performance data in the whole collection process, and these original performance data are provided for the collection access point to perform performance parsing. The parsed performance is output as a format-unified performance data file, that is, a format-converted performance data file. In the present embodiment, the format-converted performance data file is as shown in Table 1:

**Table 1**

| Column name | Meaning | Example |
|---|---|---|
| Vendor | Vendor | ZTE |
| Network | Network | RAN |
| Version | Version | 2.1 |
| Granularity | Granularity | 60 |
| NE Type | NE Type | BTS |
| DataTime | Data time | 2015-03-20 07:40:00 |
| Success Call Rate/Unit | Counter 1/unit | 30/% |
| ... | ... | ... |
| Failed Call Rate/Unit | Counter N/unit | 70/% |

The collection task is divided into a performance file data collection task and a non-performance file collection task according to a used northbound interface. A collection component used in the performance file collection task is an FTP/SFTP collection component, and a component used in the non-performance file collection task is components other than the FTP/SFTP collection component, and the collection component may be selected to be used via configurations.

Step S102 includes a performance data model is extracted from the format-converted performance data according to the pre-set extraction rule.

In the present embodiment, it may be searched regularly whether there are format-converted performance data. After the format-converted performance data are found, a performance data model is extracted from the found performance data.

The pre-set extraction rule is to extract a performance data model according to the format of the pre-set performance data model.

In an exemplary embodiment, the performance data model includes a group performance data model and a performance data sub-model associated with the group performance data model. Herein, information about one or more performance parameters is described in the group performance data model, and attribute information of a performance parameter in the group performance data model associated therewith is described in the performance data sub-model. For example, in the present embodiment, the group performance data model is as shown in Table 2, and the performance data sub-model is as shown in Table 3.

**Table 2**

| Name | Optical_Max |
|---|---|
| Network | CDMA |
| Vendor | ZTE |
| NE Type | BTS |
| Version | 2.1 |
| Granularity | 60min |
| Performance index | Success Call Rate |
| | ... |
| | Failed Call Rate |

**Table 3**

| Name of group performance data model to which the performance data sub-model belongs | Optical_Max |
|---|---|
| Name | Success Call Rate |
| Length | 2 |
| Precision | 0 |
| Unit | % |

In the present embodiment, by configuring a group performance data model and a performance data sub-model associated with the group performance data model, a performance data model can be more flexibly managed. When a certain performance parameter of a lower network manager is addition or update, it is only required to correspondingly update a performance data sub-model corresponding to the performance parameter without modifying the whole performance data model, so that the management of performance data model can be more flexible and more efficient.

An embodiment of the present invention provides a network management data processing apparatus. The network management data processing apparatus can be applied to automatically manage a performance data model in a telecommunication OSS domain, and is particularly suitable for management over an EMS by an NMS in the telecommunication OSS domain. In addition, the apparatus may also be suitable for management over an NE by the EMS. In the embodiment of the present invention, management over the EMS by the NMS is taken as an example. In the present embodiment and the following embodiments, the EMS is collectively referred to as a lower network manager, and the NMS is collectively referred to as a higher network manager.

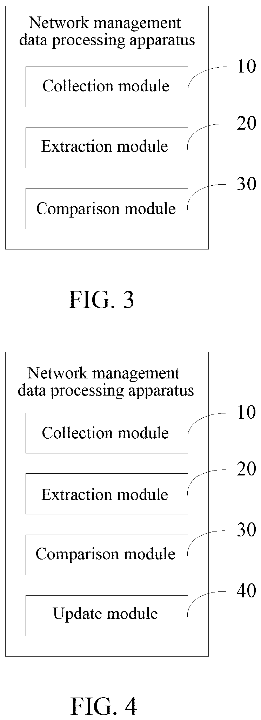

Referring to FIG. 3, FIG. 3 is a function module diagram of a network management data processing apparatus according to the first embodiment of the present invention. The network management data processing apparatus provided in the embodiment of the present invention includes a collection module 10, an extraction module 20 and a comparison module 30.

The collection module 10 is configured to collect performance data of a lower network manager.

In the present embodiment, a higher network manager may be provided with one or more collection access points for collecting performance data of a lower network manager, and each collection access point is configured with a collection task to collect the performance data of the lower network manager. The higher network manager may actively acquire the performance data of the lower network manager in real time or regularly, or the lower network manager may send the performance data to the higher network manager in real time or regularly.

The extraction module 20 is configured to extract a performance data model from the performance data according to a pre-set extraction rule.

In the present embodiment, a performance data model is performance data statistical parameter item information not containing performance data values, which may be, e.g., a parameter type corresponding to the performance data, attribute information corresponding to each parameter and the like,

The pre-set extraction rule may be set according to actual requirements. For example, the collected data may be parsed firstly, and then a performance data model may be extracted from the parsed performance data. Or, a performance data model may be directly extracted from collected original data. When the performance data model is extracted, the performance data model may be extracted according to a pre-set format. For example, the format of a pre-set performance data model is: parameter statistical items in a first column are "Name", "Network", "Vendor", "NE Type", "Version", "Granularity", "Performance Index" and the like respectively, so that the performance data model is extracted according to the format when the performance data model is extracted.

The comparison module 30 is configured to compare the performance data model with a pre-set performance data model, and output prompt information corresponding to a comparison result, and/or, update the pre-set performance data model according to the performance data model when the performance data model is inconsistent with the pre-set performance data model. Thus, the higher network manager can automatically update a pre-set performance data model corresponding to a lower network manager, and acquisition time for a performance data model during connecting between the higher network manager and each lower network manager is effectively shortened, and at the later period of development of telecommunication projects, once the performance data model corresponding to the lower network manager is changed, the higher network manager can automatically update the pre-set performance data model, and the labor cost and the time cost are effectively reduced.

In the present embodiment, there may be multiple pre-set performance data models in each higher network manager, and there may also be multiple pre-stored performance data models corresponding to each lower network manager, herein the quantity may be set according to actual requirements. When a performance data model is extracted, the performance data model is extracted according to the format of a pre-set performance data model. To increase the comparison efficiency, when a performance data model is extracted, identification information may be established for each extracted performance data model according to a pre-set rule, and identification information may also be established for the pre-set performance data models according to the above-mentioned pre-set rule. When the performance data model is compared with the pre-set performance data models, whether there is identification information consistent with the performance data model may be searched firstly. When the identification information is not found, it is indicated that the currently-extracted performance data model is a performance data model corresponding to a newly-added lower network manager. When the identification information is found, the performance data model is compared with a pre-set performance data model corresponding to the found identification information, and when the performance data model is inconsistent with the pre-set performance data model corresponding to the found identification information, it is indicated that a lower network manager corresponding to the currently-extracted performance data model is updated or upgraded.

The comparison result may be divided into two types, i.e., consistency and inconsistency. When the comparison result is inconsistency, prompt information may be output and displayed. And the prompt information may be a list, and all performance data models inconsistent with the pre-set performance data model are recorded in the list, to prompt a user of whether to update the performance data model. When a trigger operation based on the list is received, a performance data model corresponding to the trigger operation is determined, and the pre-set performance data model is updated according to the determined performance data model. When the inconsistent performance data model is a newly-added performance data model, the inconsistent performance data model is directly set as the pre-set performance data model; and when the inconsistent performance data model is an updated performance data model, the corresponding pre-set performance data model is directly updated according to the inconsistent performance data model. In addition, the above-mentioned prompt information may also be a display interface, herein the display interface displays prompt information such as "a performance data model is updated or newly added". The display interface may be further provided with an update control or a cancelation control. When the user triggers the update control, a higher NMS will automatically update the pre-set performance data model according to the performance data model, and when the user triggers the cancelation control, no processing is performed.

According to the network management data processing apparatus provided in the embodiments of the present invention, performance data of a lower network manager are collected, and a performance data model is extracted from the performance data according to a pre-set extraction rule, and the performance data model is compared with a pre-set performance data model, and prompt information corresponding to a comparison result is output, and/or the pre-set performance data model is updated according to the performance data model when the performance data model is inconsistent with the pre-set performance data model. Thus, when a lower network manager is newly added or updated to result in change of a performance data model, a higher network manager can perform automatic identification, and can output prompt information or automatically complete update for the pre-set performance data model.

To be capable of automatically identifying a performance data model corresponding to a lower network manager and updating a corresponding pre-set performance data model, a network management data processing apparatus according to a second embodiment is also provided on the basis of the network management data processing apparatus in the first embodiment of the present invention. Referring to FIG. 4, FIG. 4 is a function module diagram of a network management data processing apparatus according to the second embodiment of the present invention. The network management data processing apparatus further includes an update module 40.

The update module 40 is configured to update, when receiving an update instruction, the pre-set performance data model according to the performance data model.

In the present embodiment, prompt information may be a list, and all performance data models inconsistent with the pre-set performance data model are recorded in the list, to prompt a user of whether to update the performance data model. When a trigger operation based on an identifier corresponding to a certain performance data model in the list is received, which may be regarded as that an update instruction is received, the pre-set performance data model is updated according to a performance data model corresponding to the update instruction. When the inconsistent performance data model is a newly-added performance data model, the inconsistent performance data model is directly set as the pre-set performance data model. When the inconsistent performance data model is an updated performance data model, the corresponding pre-set performance data model is directly updated according to the inconsistent performance data model. In addition, the above-mentioned prompt information may also be a display interface, herein the display interface displays prompt information such as "a performance data model is updated or newly added". The display interface may be further provided with an update control or a cancelation control. When the user triggers the update control, which may be regarded as that the update instruction is received, a higher NMS will automatically update the pre-set performance data model according to the performance data model; and when the user triggers the cancelation control, no processing is performed.

According to the network management data processing apparatus provided in the present embodiment, a higher network manager can automatically update the pre-set performance data model corresponding to a lower network manager according to the selection of a user.

To be capable of automatically identifying a performance data model corresponding to a lower network manager and updating a corresponding pre-set performance data model, a network management data processing apparatus according to a third embodiment is provided on the basis of the network management data processing apparatus in the first or second embodiment of the present invention. The comparison module 30 includes a comparison unit and an output unit.

The comparison unit is configured to compare the performance data model with a pre-set performance data model.

The output unit is configured to mark a performance data model inconsistent with the pre-set performance data model, and output corresponding marking information.

In the present embodiment, the marking information may be output in a list form, and each piece of marking information may correspond to a performance data model. In an exemplary embodiment, each piece of marking information may also correspond to a set control, and when the corresponding control is triggered, a pre-set performance data model is updated according to the performance data model corresponding to the control.

To be capable of automatically identifying a performance data model corresponding to a lower network manager and updating a corresponding pre-set performance data model, a network management data processing apparatus according to a fourth embodiment is provided on the basis of the network management data processing apparatus in any one of the first to third embodiments of the present invention. The network management data processing apparatus further includes a format conversion module.

The format conversion module is configured to perform a format conversion on the performance data according to a pre-set format conversion rule.

Since an EMS of each vendor has different data format specifications, for example, a file supporting FTP/SFTP also includes files such as xml, txt and csv and the like, each NMS is provided with one or more collection access points. Herein, each collection access point needs to parse and develop a collected performance data file independently. A common file format supports a set of collection access points, and is configured to be reused by different collection columns.

Each collection access point is correspondingly provided with one or more collection components, and the collection components may include an FTP collection component, an SNMP collection component, a Corba collection component and the like. Each collection component supports a class of data transmission protocols. Once a lower network manager has a new access protocol, a corresponding component may be developed into the collection component. A collection task is a performance collection process, and the collection component will be called to acquire original performance data in the whole collection process, and these original performance data are provided for the collection access point to perform performance parsing. The parsed performance is output as a format-unified performance data file, that is, a format-converted performance data file. In the present embodiment, the format-converted performance data file is as shown in Table 1.

The collection task is divided into a performance file data collection task and a non-performance file collection task according to a used northbound interface. A collection component used in the performance file collection task is an FTP/SFTP collection component, and a component used in the non-performance file collection task is components other than the FTP/SFTP collection component, and the collection component may be selected to be used via configurations.

The extraction module 20 is further configured to extract a performance data model from the format-converted performance data according to the pre-set extraction rule.

In the present embodiment, it may be searched regularly whether there are format-converted performance data. After the format-converted performance data are found, a performance data model is extracted from the found performance data.

The pre-set extraction rule is to extract a performance data model according to the format of the pre-set performance data model.

In an exemplary embodiment, the performance data model includes a group performance data model and a performance data sub-model associated with the group performance data model. Herein, information about one or more performance parameters is described in the group performance data model, and attribute information of a performance parameter in the group performance data model associated therewith is described in the performance data sub-model. For example, in the present embodiment, the group performance data model is as shown in Table 2, and the performance data sub-model is as shown in Table 3.

In the present embodiment, by configuring a group performance data model and a performance data sub-model associated with the group performance data model, a performance data model can be more flexibly managed. When a certain performance parameter of a lower network manager is addition or update, it is only required to correspondingly update a performance data sub-model corresponding to the performance parameter without modifying the whole performance data model, so that the management of performance data model can be more flexible and more efficient.

It is important to note that in the present document, terms "include", "contain" or any other variations thereof are intended to cover non-exclusive inclusions, such that a process, method, article or device including a series of elements not only includes those elements, but also includes other elements that are not clearly listed, or further includes elements inherent to the process, method, article or device. Under the condition of no more limitations, it is not excluded that additional identical elements exist in the process, method, article or device including elements defined by a sentence "including a ...".

The serial numbers of the embodiments of the present invention are only used for description, and do not indicate the preference of the embodiments.

Those of ordinary skill in the art may understand that all or some of the steps in the above-mentioned embodiments may be implemented by using a computer program flow. The computer program may be stored in a computer-readable storage medium. The computer program is executed on a corresponding hardware platform (such as system, equipment, device and apparatus). During execution, the computer program includes one of the steps of the method embodiment or a combination thereof.

In an exemplary embodiment, all or some of the steps in the above-mentioned embodiments may also be implemented by using an integrated circuit. These steps may be manufactured into integrated circuit modules respectively, or multiple modules or steps therein are manufactured into a single integrated circuit module.

The apparatuses/function modules/function units in the above-mentioned embodiments may be implemented by using a general computation device. They may be centralized on a single computation device or may be distributed on a network composed of multiple computation devices.

When being implemented in a form of software function module and is sold or used as an independent product, the apparatuses/function modules/function units in the above-mentioned embodiments may be stored in a computer-readable storage medium. The above-mentioned computer-readable storage medium may be a read-only memory, a magnetic disk or an optical disk or the like.

### Industrial Applicability

When a lower network manager is newly added or updated to result in change of a performance data model, the embodiments of the present invention can output automatically prompt information corresponding to a comparison result and/or automatically update a pre-set performance data model according to the performance data model, to be capable of automatically identifying whether the performance data model is changed when the lower network manager is newly added or updated.

## Claims

1. A network management data processing method, comprising:
collecting performance data of a lower network manager;
extracting a performance data model from the performance data according to a pre-set extraction rule;
comparing the performance data model with a pre-set performance data model; and
outputting prompt information corresponding to a comparison result, and/or, updating the pre-set performance data model according to the performance data model when the performance data model is inconsistent with the pre-set performance data model.

2. The network management data processing method according to claim 1, wherein after the step of comparing the performance data model with a pre-set performance data model and outputting prompt information corresponding to a comparison result, the network management data processing method further comprises:
updating, when receiving an update instruction, the pre-set performance data model according to the performance data model.

3. The network management data processing method according to claim 1, wherein the step of outputting prompt information corresponding to a comparison result comprises:
marking a performance data model inconsistent with the pre-set performance data model, and outputting corresponding marking information.

4. The network management data processing method according to any one of claims 1 to 3, wherein after the step of collecting performance data of a lower network manager and before the step of extracting a performance data model from the performance data according to a pre-set extraction rule, the network management data processing method further comprises:
performing a format conversion on the performance data according to a pre-set format conversion rule, wherein
the step of extracting a performance data model from the performance data according to a pre-set extraction rule comprises:
extracting the performance data model from the format-converted performance data according to the pre-set extraction rule.

5. The network management data processing method according to any one of claims 1 to 3, wherein the performance data model comprises a group performance data model and a performance data sub-model associated with the group performance data model, wherein information about one or more performance parameters is described in the group performance data model, and attribute information of a performance parameter in the group performance data model associated with the performance data sub-model is described in the performance data sub-model.

6. A network management data processing apparatus, comprising:
a collection module, configured to collect performance data of a lower network manager;
an extraction module, configured to extract a performance data model from the performance data according to a pre-set extraction rule; and
a comparison module, configured to compare the performance data model with a pre-set performance data model, output prompt information corresponding to a comparison result, and/or, update the pre-set performance data model according to the performance data model when the performance data model is inconsistent with the pre-set performance data model.

7. The network management data processing apparatus according to claim 6, further comprising:
an update module, configured to update, when receiving an update instruction, the pre-set performance data model according to the performance data model.

8. The network management data processing apparatus according to claim 6, wherein the comparison module comprises:
a comparison unit, configured to compare the performance data model with the pre-set performance data model; and
an output unit, configured to mark a performance data model inconsistent with the pre-set performance data model, and output corresponding marking information.

9. The network management data processing apparatus according to any one of claims 6 to 8, further comprising:
a format conversion module, configured to perform a format conversion on the performance data according to a pre-set format conversion rule, wherein
the extraction module is further configured to extract the performance data model from the format-converted performance data according to the pre-set extraction rule.

10. The network management data processing apparatus according to any one of claims 6 to 8, wherein the performance data model comprises a group performance data model and a performance data sub-model associated with the group performance data model, wherein information about one or more performance parameters is described in the group performance data model, and attribute information of a performance parameter in the group performance data model associated with the performance data sub-model is described in the performance data sub-model.

11. A computer-readable storage medium, storing a computer-executable instruction, and the computer-executable instruction being used to execute the method according to any one of claims 1 to 5.
